(19) Europäisches Patentamt / European Patent Office / Office européen des brevets

(11) **EP 4 718 559 A1**

(12) **EUROPEAN PATENT APPLICATION**
published in accordance with Art. 153(4) EPC

(43) Date of publication:
01.04.2026 Bulletin 2026/14

(21) Application number: 24830922.1

(22) Date of filing: 27.06.2024

(51) International Patent Classification (IPC):
$H01M\ 10/0562^{(2010.01)}$      $H01M\ 10/0525^{(2010.01)}$
$H01M\ 10/42^{(2006.01)}$

(52) Cooperative Patent Classification (CPC):
Y02E 60/10

(86) International application number:
PCT/CN2024/102140

(87) International publication number:
WO 2025/002290 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.06.2023 CN 202310798194

(71) Applicant: Ningbo Ronbay New Energy
Technology Co., Ltd.
Yuyao Ningbo, Zhejiang 315402 (CN)

(72) Inventors:
• KONG, Xia
Ningbo, Zhejiang 315402 (CN)
• LI, Huihao
Ningbo, Zhejiang 315402 (CN)

• FENG, Daoyan
Ningbo, Zhejiang 315402 (CN)
• LEE, Jonghee
Ningbo, Zhejiang 315402 (CN)
• YAN, Xufeng
Ningbo, Zhejiang 315402 (CN)
• WANG, Xiaoming
Ningbo, Zhejiang 315402 (CN)
• LIU, Jikang
Ningbo, Zhejiang 315402 (CN)
• ZHAO, Chen
Ningbo, Zhejiang 315402 (CN)
• WANG, Hua
Ningbo, Zhejiang 315402 (CN)

(74) Representative: Bandpay & Greuter
11, rue Christophe Colomb
75008 Paris (FR)

(54) **SULFIDE SOLID ELECTROLYTE, AND PREPARATION METHOD THEREFOR AND USE THEREOF**

(57) A sulfide solid electrolyte, and a preparation method thereof and a use thereof, where the sulfide solid electrolyte has a chemical composition of $Li_aSb_bP_cS_dO_eCl_f$, where $4.5 \leq a \leq 6.5$, $0.02 \leq b \leq 0.9$, $0.01 \leq e \leq 0.06$, $0.9 \leq f \leq 1.6$, $b+c=1$, $d+e=5$, and a percentage of Sb-S bonding in a total bonding formed by Sb is not less than 98%. In an X-ray diffraction pattern of the sulfide solid electrolyte, intensities of diffraction peaks at $2\theta$ of $29.8 \pm 0.25°$, $33.33 \pm 0.25°$ and $31.45 \pm 0.25°$ are $I_a$, $I_b$ and $I_c$, respectively; where $I_c/I_a$ is 18-26%, and $I_c/I_b$ is 25-36%. The sulfide solid electrolyte has good ionic conductivity, and also has good stability in air.

FIG. 3

## Description

The present application claims priority to Chinese Patent Application No. 202310798194.3 filed with China National Intellectual Property Administration on June 30, 2023, entitled "Sulfide Solid Electrolyte, and Preparation Method Thereof and Use Thereof", which is hereby incorporated by reference in its entirety.

## TECHNICAL FIELD

The present application relates to the field of lithium-ion batteries, and particularly relates to a sulfide solid electrolyte and a preparation method thereof and a use thereof.

## BACKGROUND

Lithium-ion batteries have been widely used in various portable electronic products, new energy vehicles and other fields due to their advantages such as high energy density, high operating voltage, and long service life. However, the liquid electrolytes used in traditional lithium-ion batteries are highly unstable and prone to combustion and explosion under high temperatures, short circuits, or physical impacts, posing significant safety risks. In contrast, solid electrolytes used in solid-state lithium-ion batteries can fundamentally resolve the safety issues of liquid lithium-ion batteries and can also operate under extreme conditions such as high or low temperatures.

Currently, the more extensively studied solid electrolytes mainly include oxide solid electrolytes and sulfide solid electrolytes. Among them, oxide solid electrolytes exhibit high oxidation potential and good stability, but generally suffer from low ionic conductivity, high rigidity, and poor ductility. Sulfide solid electrolytes have higher ionic conductivity and good mechanical properties because the sulfur ions have weaker binding to cations due to smaller electronegativity and facilitate lithium-ion transport due to larger radius. However, sulfide solid electrolytes are unstable in air and readily undergo irreversible side reactions with moisture, oxygen, and carbon dioxide in the air, releasing toxic hydrogen sulfide gas, which causes a collapsed structure of the sulfide solid electrolyte, a decreased ionic conductivity, and affects the long-term cycling performance of the battery, and thus seriously restricts the application of sulfide solid electrolytes in all-solid-state lithium batteries. Therefore, it is necessary to develop a sulfide solid electrolyte with good air stability.

## SUMMARY

In view of the above-described defects in the prior art, the present application provides a sulfide solid electrolyte having good ionic conductivity and having good stability in air.

The present application provides a preparation method of a sulfide solid electrolyte, which method is simple, has low operation cost, and can promote the formation of Sb-S bonding and P-O bonding, improving the air stability and ionic conductivity of the electrolyte.

The present application further provides an all-solid-state lithium-ion battery, including the sulfide solid electrolyte described above. The all-solid-state lithium-ion battery has good cycling performance and rate capability.

The present application provides a sulfide solid electrolyte, having a chemical composition of Formula 1, where a percentage of Sb-S bonding in a total bonding formed by Sb is not less than 98%,

$$Li_aSb_bP_cS_dO_eCl_f \qquad \text{Formula 1}$$

in Formula 1, $4.5 \leq a \leq 6.5$, $0.02 \leq b \leq 0.9$, $0.01 \leq e \leq 0.06$, $0.9 \leq f \leq 1.6$, $b+c=1$, $d+e=5$;

in an X-ray diffraction pattern of the sulfide solid electrolyte, intensities of diffraction peaks at $2\theta$ of $29.8 \pm 0.25°$, $33.33 \pm 0.25°$ and $31.45 \pm 0.25°$ are $I_a$, $I_b$ and $I_c$, respectively, where $I_c/I_a$ is 18-26%, and $L_c/I_b$ is 25-36%.

Further, a room-temperature ionic conductivity of the sulfide solid electrolyte is not less than 7.5 mS/cm.

Further, an ionic conductivity retention rate of the sulfide solid electrolyte is not less than 70%.

Further, the sulfide solid electrolyte is prepared by a method including the following process:
mixing $Sb_2S_5$, a P source and an O source and performing a primary milling, then adding a Li source and a Cl source and performing a secondary milling, to obtain an intermediate phase, sintering the intermediate phase, to obtain the sulfide solid electrolyte.

The present application further provides a preparation method of a sulfide solid electrolyte, including the following steps:

(1) mixing $Sb_2S_5$, a P source and an O source and performing a primary milling, then adding a Li source and a Cl source and performing a secondary milling, to obtain an intermediate phase; and

(2) performing a sintering treatment on the intermediate phase, to obtain the sulfide solid electrolyte.

Further, in step (1), the P source includes at least one of $P_2O_5$ and $P_2S_5$; the O source includes at least one of $P_2O_5$ and $Li_2O$; the Li source includes at least one of $Li_2O$, $Li_2S$ and $LiCl$; the Cl source includes $LiCl$.

Further, in step (1), a rotation speed of the primary milling is 350-550 r/min, and a time for the primary milling is 0.5-2 h.

Further, in step (1), a rotation speed of the secondary milling is 350-550 r/min, and a time for the secondary milling is 3-5 h.

Further, in step (2), a temperature of the sintering treatment is 530-580°C, and a time for the sintering treatment is 4-6 h.

The present application further provides an all-solid-state lithium-ion battery, including the sulfide solid electrolyte according to any one of the above claims.

The sulfide solid electrolyte of the present application includes stable Sb-S bonding and P-O bonding, where a percentage of Sb-S bonding in a total bonding formed by Sb is not less than 98%. Due to the presence of abundant stable Sb-S bonding in the sulfide solid electrolyte, when moisture is present in air, since O in water molecules is less likely to combine with Sb in Sb-S bonding to form Sb-O bonding, S is not easily lost, improving air stability. At the same time, the reason for the sulfide solid electrolyte having good air stability and good ionic conductivity may also be attributed to the fact that in the X-ray diffraction pattern of the sulfide solid electrolyte, the intensities of diffraction peaks at 2θ of 29.8±0.25°, 33.33±0.25° and 31.45±0.25° are $I_a$, $I_b$ and $I_c$, respectively, where $I_c/I_a$ is 18-26%, and $I_c/I_b$ is 25-36%, which enables that the S element in the sulfide solid electrolyte is more stable and is not easily replaced by O in water molecules, thereby improving the stability of the electrolyte in air.

## BRIEF DESCRIPTION OF DRAWINGS

FIG. 1 is a XPS spectrum of a sulfide solid electrolyte according to Example 4 of the present application.
FIG. 2 is Raman spectra of sulfide solid electrolytes according to Example 4 and Comparative Example 6 of the present application.
FIG. 3 is a XRD pattern of sulfide solid electrolytes according to Comparative Example 3 and Example 4 of the present application.
FIG. 4 is a SEM image of a sulfide solid electrolyte according to Example 1 of the present application.
FIG. 5 is a SEM image of a sulfide solid electrolyte according to Example 4 of the present application.
FIG. 6 is a $H_2S$ gas concentration change curves produced by sulfide solid electrolytes according to Example 4 and Comparative Example 1 of the present application after exposure in a glove box at a dew point of -50°C for 1 h.

## DESCRIPTION OF EMBODIMENTS

To make the objectives, technical solutions, and advantages of the present application clearer, the following clearly and comprehensively describes the technical solutions in embodiments of the present application with reference to the embodiments of the present application. Apparently, the described embodiments are merely some rather than all of embodiments of the present application. All other embodiments obtained by persons of ordinary skill in the art based on embodiments of the present application without creative effort shall fall within the protection scope of the present application.

A first aspect of the present application provides a sulfide solid electrolyte, having a chemical composition of Formula 1, where a percentage of Sb-S bonding in a total bonding formed by Sb is not less than 98%,

$$Li_aSb_bP_cS_dO_eCl_f \qquad \text{Formula 1}$$

in Formula 1, 4.5≤a≤6.5, 0.02≤b≤0.9, 0.01≤e≤0.06, 0.9≤f≤1.6, b+c=1, d+e=5;
in an X-ray diffraction pattern of the sulfide solid electrolyte, intensities of diffraction peaks at 2θ of 29.8±0.25°, 33.33±0.25° and 31.45±0.25° are $I_a$, $I_b$, and $I_c$, respectively; and $I_c/I_a$ is 18-26%, and $I_c/I_b$ is 25-36%.

The present application does not impose specific limitations on a particle size of the sulfide solid electrolyte, and the particle size of the sulfide solid electrolyte may be any diameter.

In the sulfide solid electrolyte of the present application, Sb element and O element are doped, and according to the Hard and Soft Acids and Bases theory, the soft acid Sb is more likely to combine with the soft base S to form a more stable Sb-S bonding, while O tends to combine with P to form P-O bonding, where the percentage of Sb-S bonding in the total bonding formed by Sb is greater than 98%. When there is moisture in the air, since the sulfide solid electrolyte contains a large amount of stable Sb-S bonding, and the S in the Sb-S bonding is not easily replaced by O in the moisture, the generation of Sb-O bonding and by-product $H_2S$ gas, which will result in the collapse of the crystal structure, is effectively avoided, thereby improving the crystal structure stability of the sulfide solid electrolyte in the air environment. At the same time, the reason for high air stability and high ionic conductivity of the sulfide electrolyte may also be attributed to the fact that in the X-ray diffraction pattern of the sulfide solid electrolyte, the intensities of diffraction peaks at 2θ of 29.8±0.25°, 33.33±0.25° and 31.45±0.25° are $I_a$, $I_b$ and $I_c$, respectively, where $I_c/I_a$ is 18-26%, and $I_c/I_b$ is 25-36%, which enables that the S element in the Sb-S bonding exists stably in the crystal lattice of the sulfide solid electrolyte and is not easily replaced by O in moisture, and the stability of the crystal structure of the sulfide solid electrolyte is effectively improved, thereby improving the air stability and the ionic conductivity of the sulfide solid electrolyte.

In addition, due to large atomic radius and low valence of the doped element Sb, the volume of the unit cell is expanded and the solubility of Li+ in the unit lattice is increased, which reduces the activation energy of $Li^+$ motion. Thus, the ionic conductivity may be further improved.

In a specific implementation, a room-temperature ionic conductivity of the sulfide solid electrolyte is not less than 7.5 mS/cm. Room-temperature ionic conductivity refers to an ionic conductivity at 23-27°C. Specifically, by controlling the milling time, the milling rotation speed, the sintering time, and the sintering temperature, the stability of the S element is further improved, so that the sulfide solid electrolyte has the ionic conductivity described above, and thus the all-solid-state lithium-ion batteries including the sulfide solid electrolyte have good charge-discharge rate capability.

In a specific implementation, an ionic conductivity retention rate of the sulfide solid electrolyte is not less than 70%. The ionic conductivity retention rate of the sulfide solid electrolyte refers to an ionic conductivity retention rate at a temperature of 23 to 27°C and an air dew point of -48 to -52°C. Specifically, by controlling the doping molar amounts of the Sb source and O source, as well as the milling time, the milling rotation speed, the sintering time, and the sintering temperature, the stability of the S element is further enhanced, so that the sulfide solid electrolyte has the ionic conductivity retention rate described above, and the all-solid-state lithium-ion batteries including the sulfide solid electrolyte have good stability in an air environment, with the ionic conductivity maintained at a good level, thereby reducing the impact on the cycling performance of the batteries.

The present application does not limit the preparation method of the foregoing sulfide solid electrolyte. In a specific implementation, the sulfide solid electrolyte is prepared by a method including the following processes: mixing $Sb_2S_5$, a P source and an O source and performing a primary milling, then adding a Li source and a Cl source and performing a secondary milling, to obtain an intermediate phase, sintering the intermediate phase, to obtain the sulfide solid electrolyte.

Specifically, under a protective atmosphere, $Sb_2S_5$, a P source, and an O source are mixed and subjected to a primary milling, after which an Li source and a Cl source are added for a secondary milling to obtain an intermediate phase; subsequently, the intermediate phase is sintered under a protective atmosphere to yield the sulfide solid electrolyte.

In the present application, the "P source" refers to a raw material for providing the P element, the "O source" refers to a raw material for providing the O element, the "Li source" refers to a raw material for providing the Li element, and the "Cl source" refers to a raw material for providing the Cl element. Any material containing the target elements (P, O, Li, Cl) falls within the scope of the present application, and one target element may be introduced into the reaction system via one or more raw materials. It should be noted that when a raw material contains two or more of the target elements, it can be regarded as an element source for two elements. For example, when the raw material is $Li_2O$, it serves as both the Li source and the O source.

The present application does not impose specific limitations on a molar ratio between $Sb_2S_5$, the P source, and the O source, or between the Li source and the Cl source, as long as the chemical formula of the prepared sulfide solid electrolyte satisfies Formula 1.

In the above preparation method, selecting $Sb_2S_5$ as the Sb source, compared to other Sb sources such as $Sb_2O_5$, not only helps increase the percentage of Sb-S bonding and form a stable crystal structure but also reduces the sintering temperature and ball-milling speed during preparation to reduce energy waste. At the same time, through the primary milling process, the formation of Sb-S bonding and P-O bonding is facilitated, thereby increasing an existence percentage of Sb-S bonding. When moisture is present in the air, since the prepared sulfide solid electrolyte contains a large amount of Sb-S bonding and S in Sb-S bonding is not easily replaced by O in moisture, the sulfide solid electrolyte does not undergo crystal structure collapse due to S loss, is more stable in the air environment, thereby improving its air stability.

A second aspect of the present application provides a preparation method of a sulfide solid electrolyte, including the following steps:

(1) mixing $Sb_2S_5$, a P source and an O source and performing a primary milling, then adding a Li source and a Cl source and performing a secondary milling, to obtain an intermediate phase; and
(2) performing a sintering treatment on the intermediate phase, to obtain a sulfide solid electrolyte.

Where the P source, O source, Li source, and Cl source are as defined above, and thus will not be reiterated.

Specifically, in step (1), under a sealed and protective atmosphere, $Sb_2S_5$, the P source and the O source are mixed and subjected to a primary milling, after which the Li source and Cl source are added for a secondary milling to obtain an intermediate phase. In this step, $Sb_2S_5$, the P source, O source, Li source and Cl source are thoroughly mixed, to facilitate the formation of Sb-S bonding and P-O bonding.

The present application does not impose specific limitations on the protective atmosphere. For example, argon may be selected as the protective atmosphere.

In step (2), the intermediate phase is sintered under a protective atmosphere to yield a sintered product, which is then milled and crushed to obtain the sulfide solid electrolyte. In this step, since the intermediate phase undergoes two milling processes and includes $Sb_2S_5$ that effectively promotes the formation of Sb-S bonding and P-O bonding, a relatively stable crystal structure can be formed during the sintering treatment, so that the S element in the sintered product is more stable, and when moisture is present in the air, the S element is less likely to be replaced by O from water molecules, preventing side reactions and thereby improving the air stability.

The present application imposes no specific limitations on a molar ratio between $Sb_2S_5$, the P source, and the O source, or between the Li source and the Cl source, as long as the chemical formula of the prepared sulfide solid electrolyte satisfies Formula 1.

The present application does not limit the specific sources of $Sb_2S_5$, the P source, O source, Li source, and Cl source. For example, they may be obtained commercially or through conventional preparation methods.

The present application does not impose specific limitations on the milling method. Exemplarily, at least one of mechanical ball milling, high-energy ball milling, or roller milling may be employed.

The present application does not impose specific limitations on the crushing method. Exemplarily, the crushing may be performed using a crusher.

The present application does not impose specific limitations on the protective atmosphere. For example, argon may be selected as the protective atmosphere.

The preparation method of the sulfide solid electrolyte in the present application is simple and easy to implement, with low operational cost. Moreover, through the primary milling process, the formation of Sb-S bonding is promoted, increasing the percentage of Sb-S bonding. As a result, in the prepared sulfide solid electrolyte, the S in Sb-S bonding is less likely to be replaced by O from moisture in an air environment, preventing the generation of by-product $H_2S$ gas and thereby avoiding damage to the crystal structure, so that the prepared sulfide solid electrolyte has excellent air stability and ionic conductivity.

In a specific implementation, the P source includes at least one of $P_2O_5$ and $P_2S_5$, the O source includes at least one of $P_2O_5$ and $Li_2O$, the Li source includes at least one of $Li_2O$, $Li_2S$, and LiCl, and the Cl source includes LiCl.

In a specific implementation, a rotation speed of the primary milling is 350-550 r/min, and a time for the primary milling is 0.5-2 h. When the rotation speed and time of the primary milling fall within the above ranges, the formation of Sb-S bonding and P-O bonding can be effectively promoted, thereby increasing the existence percentage of Sb-S bonding.

In a specific implementation, a rotation speed of the secondary milling is 350-550 r/min, and a time for the secondary milling is 3-5 h. When the rotation speed and time of the secondary milling fall within the above ranges, the raw materials can be mixed more uniformly, facilitating complete reaction of the intermediate phase during the sintering process.

In a specific implementation, a temperature of the sintering treatment is 530-580°C, and a time of the sintering treatment is 4-6 h. When the temperature and time of the sintering treatment fall within the above ranges, a sulfide solid electrolyte with excellent electrical and mechanical properties can be obtained.

A third aspect of the present application provides an all-solid-state lithium-ion battery, including the sulfide solid electrolyte according to the first aspect. The sulfide solid electrolyte included in the all-solid-state lithium-ion battery has good air stability and ionic conductivity, thereby effectively enhancing the performance of the battery.

Hereinafter, the sulfide solid electrolyte of the present application is described in detail through specific examples.

Example 1

A sulfide solid electrolyte of the present example was obtained by the following preparation method:

(1) $Li_2S$, $Sb_2S_5$ and $Li_2O$ were mixed at a specific molar ratio, loaded into a ball mill jar, and sealed. A primary milling was performed, where a rotation speed of the primary milling is 410 r/min, and a time for the primary milling is 1 h. The ball mill jar was transferred into a glove box, then the remaining molar amounts of $Li_2S$ and LiCl were added, and a secondary milling was performed, where a rotation speed of the secondary milling is 410 r/min and a time for the secondary milling is 4 h, to obtain an intermediate phase.

(2) A sintering treatment was performed on the intermediate phase, where a temperature of the sintering treatment is 545°C and a time for the sintering treatment is 5.5 h, to obtain a sintered product. The sintered product was milled using a crusher to obtain the sulfide solid electrolyte of the present example.

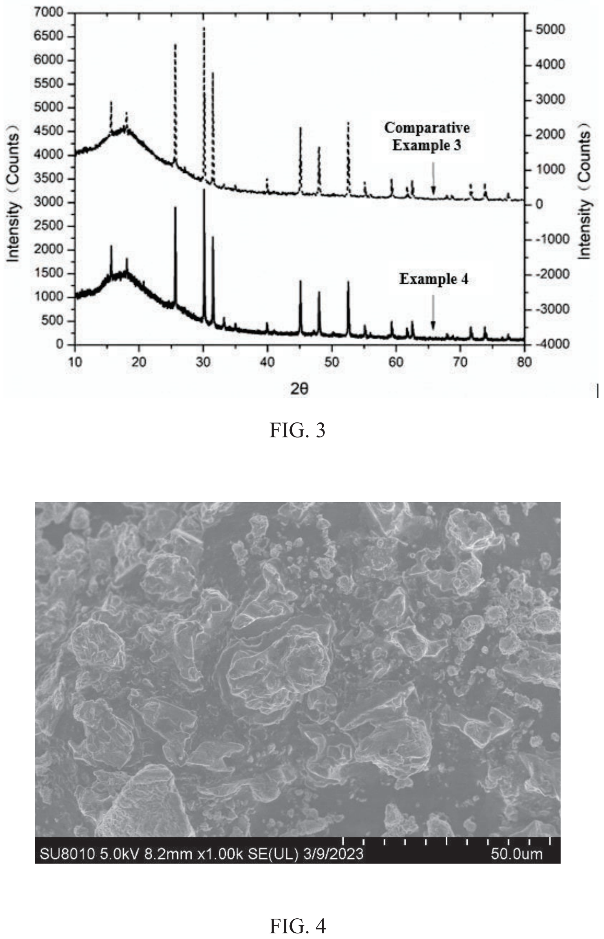

Analysis confirmed that the molecular formula of the solid electrolyte is $Li_6Sb_{0.0444}P_{0.9556}S_{1.9722}O_{0.0278}Cl$, with a size of 20 $\mu$m as measured by SEM, as shown in FIG. 4.

Example 2

A sulfide solid electrolyte of the present example was obtained by the following preparation method:

(1) $Li_2O$, $Sb_2S_5$, $Li_2S$, and a partial molar amount of $P_2S_5$ were mixed at a specific molar ratio, loaded into a ball mill jar, and sealed. A primary milling was performed, where a rotation speed of the primary milling is 410 r/min, and a time for the primary milling is 1 h. The ball mill jar was transferred into a glove box, then the remaining molar amounts of $P_2S_5$ and LiCl were added, and a secondary milling was performed, where a rotation speed of the secondary milling is 410 r/min and a time for the secondary milling is 4 h, to obtain an intermediate phase.
(2) A sintering treatment was performed on the intermediate phase, where a temperature of the sintering treatment is 545°C and a time for the sintering treatment is 5.5 h, to obtain a sintered product. The sintered product was milled using a crusher to obtain the sulfide solid electrolyte of the present example.

Analysis confirmed that the molecular formula of the solid electrolyte is $Li_6Sb_{0.0444}P_{0.9556}S_{1.9722}O_{0.0278}Cl$.

Example 3

A sulfide solid electrolyte of the present example was obtained by the following preparation method:

(1) $P_2S_5$, $Sb_2S_5$ and $Li_2O$ were mixed at a specific molar ratio, loaded into a ball mill jar, and sealed. A primary milling was performed, where a rotation speed of the primary milling is 430 r/min, and a time for the primary milling is 1.5 h. The ball mill jar was transferred into a glove box, then the remaining molar amounts of $Li_2S$ and LiCl were added, and a secondary milling was performed, where a rotation speed of the secondary milling is 430 r/min and a time for the secondary milling is 4.5 h, to obtain an intermediate phase.
(2) A sintering treatment was performed on the intermediate phase, where a temperature of the sintering treatment is 550°C and a time for the sintering treatment is 5 h, to obtain a sintered product. The sintered product was milled using a crusher to obtain the sulfide solid electrolyte of the present example.

Analysis confirmed that the molecular formula of the solid electrolyte is $Li_6Sb_{0.0667}P_{0.9333}S_{4.9583}O_{0.0417}Cl$.

Example 4

A sulfide solid electrolyte of the present example was obtained by the following preparation method:

(1) $Li_2S$, $Sb_2S_5$, $Li_2O$, and a partial molar amount of $P_2S_5$ were mixed at a specific molar ratio, loaded into a ball mill jar, and sealed. A primary milling was performed, where a rotation speed of the primary milling is 410 r/min, and a time for the primary milling is 1 h. The ball mill jar was transferred into a glove box, then the remaining molar amounts of $P_2S_5$ and LiCl were added, and a secondary milling was performed, where a rotation speed of the secondary milling is 410 r/min and a time for the secondary milling is 4 h, to obtain an intermediate phase.
(2) A sintering treatment was performed on the intermediate phase, where a temperature of the sintering treatment is 545°C a time for the sintering treatment is 5.5 h, to obtain a sintered product. The sintered product was milled using a crusher to obtain the sulfide solid electrolyte of the present example.

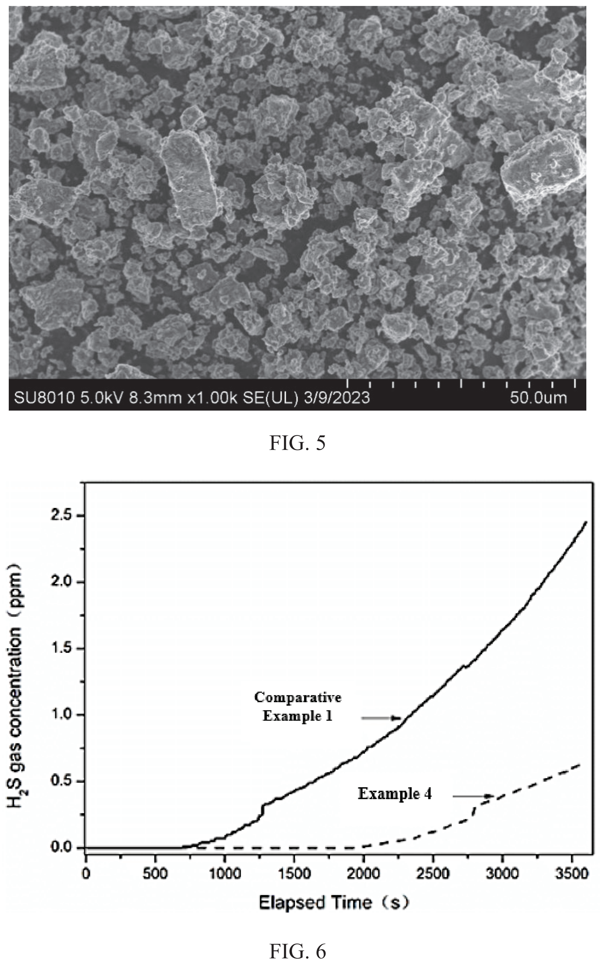

Analysis confirmed that the molecular formula of the solid electrolyte is $Li_6Sb_{0.0667}P_{0.9333}S_{4.9583}O_{0.0417}Cl$, with a size of 15 $\mu$m as measured by SEM, as shown in FIG. 5.

Example 5

(1) $Li_2S$, $Sb_2S_5$, $P_2O_5$, and a partial molar amount of $P_2S_5$ were mixed at a specific molar ratio, loaded into a ball mill jar, and sealed. A primary milling was performed, where a rotation speed of the primary milling is 375 r/min, and a time for the primary milling is 2 h. The ball mill jar was transferred into a glove box, then the remaining molar amounts of $P_2S_5$ and LiCl were added, and a secondary milling was performed, where a rotation speed of the secondary milling is 550 r/min and a time for the secondary milling is 3 h, to obtain an intermediate phase.

(2) A sintering treatment was performed on the intermediate phase, where a temperature of the sintering treatment is 530°C a time for the sintering treatment is 6 h, to obtain a sintered product. The sintered product was milled using a crusher to obtain the sulfide solid electrolyte of the present example.

Analysis confirmed that the molecular formula of the solid electrolyte is $Li_6Sb_{0.0333}P_{0.9671}S_{4.9733}O_{0.0278}Cl$.

Example 6

(1) $Li_2S$, $Sb_2S_5$, $Li_2O$, and a partial molar amount of $P_2S_5$ were mixed at a specific molar ratio, loaded into a ball mill jar, and sealed. A primary milling was performed, where a rotation speed of the primary milling is 380 r/min, and a time for the primary milling is 2 h. The ball mill jar was transferred into a glove box, then the remaining molar amounts of $P_2S_5$, $PCl_3$ and LiCl were added, and a secondary milling was performed, where a rotation speed of the secondary milling is 500 r/min and a time for the secondary milling is 3.5 h, to obtain an intermediate phase.

(2) A sintering treatment was performed on the intermediate phase, where a temperature of the sintering treatment is 560°C and a time for the sintering treatment is 5 h, to obtain a sintered product. The sintered product was milled using a crusher to obtain the sulfide solid electrolyte of the present example.

Analysis confirmed that the molecular formula of the solid electrolyte is $Li_{5.5056}Sb_{0.0333}P_{0.9667}S_{4.975}O_{0.0278}Cl$.

Example 7

A sulfide solid electrolyte of the present example was obtained by the following preparation method:

(1) $P_2S_5$, $Sb_2S_5$ and $Li_2O$ were mixed at a specific molar ratio, loaded into a ball mill jar, and sealed. A primary milling was performed, where a rotation speed of the primary milling is 550 r/min, and a time for the primary milling is 0.5 h. The ball mill jar was transferred into a glove box, then the remaining molar amounts of $Li_2S$ and LiCl were added, and a secondary milling was performed, where a rotation speed of the secondary milling is 400 r/min and a time for the secondary milling is 5 h, to obtain an intermediate phase.

(2) A sintering treatment was performed on the intermediate phase, where a temperature of the sintering treatment is 580°C and a time for the sintering treatment is 4 h, to obtain a sintered product. The sintered product was milled using a crusher to obtain the sulfide solid electrolyte of the present example.

Analysis confirmed that the molecular formula of the solid electrolyte is $Li_6Sb_{0.0444}P_{0.9556}S_{4.9722}O_{0.0278}Cl$.

Example 8

A sulfide solid electrolyte of the present example was obtained by the following preparation method:

(1) $P_2S_5$, $Sb_2S_5$ and $Li_2O$ were mixed at a specific molar ratio, loaded into a ball mill jar, and sealed. A primary milling was performed, where a rotation speed of the primary milling is 430 r/min, and a time for the primary milling is 1 h. The ball mill jar was transferred into a glove box, then the remaining molar amounts of $Li_2S$ and LiCl were added, and a secondary milling was performed, where a rotation speed of the secondary milling is 410 r/min and a time for the secondary milling is 5 h, to obtain an intermediate phase.

(2) A sintering treatment was performed on the intermediate phase, where a temperature of the sintering treatment is 520°C and a time for the sintering treatment is 5 h, to obtain a sintered product. The sintered product was milled using a crusher to obtain the sulfide solid electrolyte of the present example.

Analysis confirmed that the molecular formula of the solid electrolyte is $Li_6Sb_{0.0444}P_{0.9556}S_{4.9722}O_{0.0278}Cl$.

Example 9

A sulfide solid electrolyte of the present example was obtained by the following preparation method:

(1) $Li_2S$, $Sb_2S_5$, $Li_2O$, and a partial molar amount of $P_2S_5$ were mixed at a specific molar ratio, loaded into a ball mill jar, and sealed. A primary milling was performed, where a rotation speed of the primary milling is 430 r/min, and a time for the primary milling is 1 h. The ball mill jar was transferred into a glove box, then the remaining molar amounts of $P_2S_5$ and LiCl were added, and a secondary milling was performed, where a rotation speed of the secondary milling is 410 r/min and a time for the secondary milling is 5 h, to obtain an intermediate phase.

(2) A sintering treatment was performed on the intermediate phase, where a temperature of the sintering treatment is 520°C and a time for the sintering treatment is 5 h, to obtain a sintered product. The sintered product was milled using a crusher to obtain the sulfide solid electrolyte of the present example.

Analysis confirmed that the molecular formula of the solid electrolyte is $Li_6Sb_{0.0444}P_{0.9556}S_{4.9722}O_{0.0278}Cl$.

Comparative Example 1

A sulfide solid electrolyte of the comparative example was obtained by the following preparation method:

(1) $Li_2S$, $P_2S_5$, LiCl and $Sb_2O_5$ were mixed at a specific molar ratio, loaded into a ball mill jar, and sealed. A milling was performed, where a rotation speed of the milling is 410 r/min and a time for the milling is 4 h, to obtain an intermediate phase.

(2) A sintering treatment was performed on the intermediate phase, where a temperature of the sintering treatment is 560°C and a time for the sintering treatment is 5 h, to obtain a sintered product. The sintered product was milled using a crusher to obtain a sulfide solid electrolyte of the present example.

Analysis confirmed that the molecular formula of the solid electrolyte is $Li_6Sb_{0.05}P_{0.95}S_{4.875}O_{0.125}Cl$.

Comparative Example 2

A sulfide solid electrolyte of the comparative example was obtained by the following preparation method:

(1) $Li_2S$, $P_2S_5$, $P_2O_5$, $Sb_2S_5$ and LiI were weighed at a specific molar ratio, and poured into a ball mill jar, with a rotation speed of 600 rpm, ball milled for 24 h to obtain an intermediate phase.

(2) The intermediate phase was sintered at 490 °C under vacuum for 4 h, to obtain the sulfide solid electrolyte of the present comparative example. Analysis confirmed that the molecular formula of the solid electrolyte is $Li_6Sb_{0.8}P_{0.2}S_{4.5}O_{0.5}I$.

Comparative Example 3

A preparation method of a sulfide solid electrolyte of the present comparative example is basically the same as that of Example 4, except that $Sb_2S_3$ is used instead of $Sb_2S_5$ to obtain the sulfide solid electrolyte of the present comparative example. Analysis confirmed that the molecular formula of the solid electrolyte is $Li_6Sb_{0.0667}P_{0.933}S_{4.9055}O_{0.0278}Cl$.

Comparative Example 4

A preparation method of a sulfide solid electrolyte of the present comparative example is basically the same as that of Example 1, except that $Sb_2S_5$, a P source, an O source, a Li source and a Cl source are mixed and milled, where a rotation speed of the milling is 410 r/min and a time for the milling is 5 h, to obtain a sulfide solid electrolyte of the present comparative example. Analysis confirmed that the molecular formula of the solid electrolyte is $Li_6Sb_{0.0444}P_{0.9556}S_{1.9722}O_{0.0278}Cl$.

Comparative Example 5

A preparation method of a sulfide solid electrolyte of the present comparative example is basically the same as that of Example 3, except that $Sb_2O_5$ is used to replace 10 wt% of $Sb_2O_5$ in Example 3, to obtain a sulfide solid electrolyte of the present comparative example. Analysis confirmed that the molecular formula of the solid electrolyte is $Li_6Sb_{0.0667}P_{0.9333}S_{4.9583}O_{0.0417}Cl$.

Comparative Example 6

A preparation method of a sulfide solid electrolyte of the present comparative example is basically the same as that of Example 3, except that the addition amounts of the Sb element and the O element are changed, to obtain the sulfide solid electrolyte of the present comparative example. Analysis confirmed that the molecular formula of the solid electrolyte is $Li_6Sb_{0.02}P_{0.99}S_{4.99}O_{0.01}Cl$.

Test Example

1. XPS and XRD tests were performed on the above examples and comparative examples, and Raman detections were performed on Example 4 and Comparative Example 6.

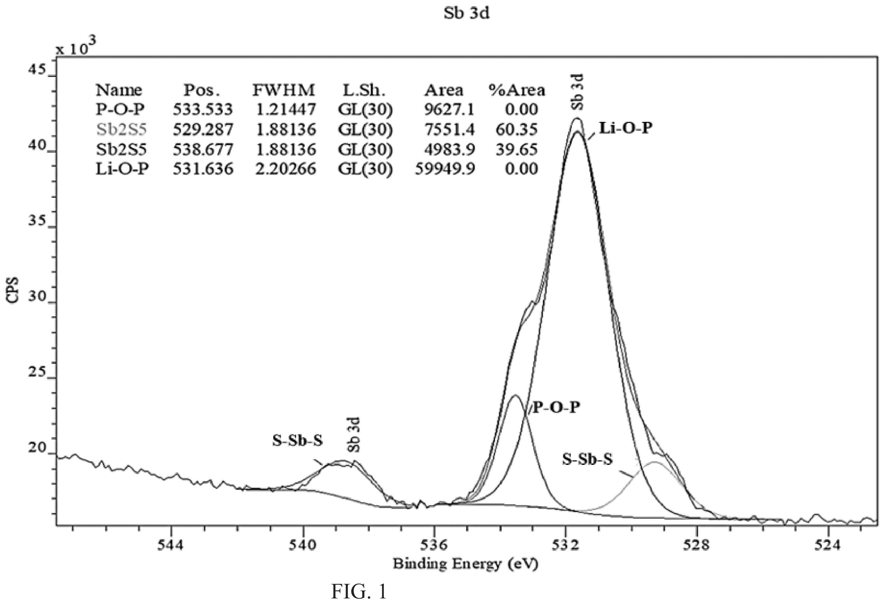

From the XPS spectrum, the percentage of Sb-S bonding in the total bonding formed by Sb can be obtained, with specific data listed in Table 1. FIG. 1 is a XPS spectrum of the sulfide solid electrolyte according to Example 4.

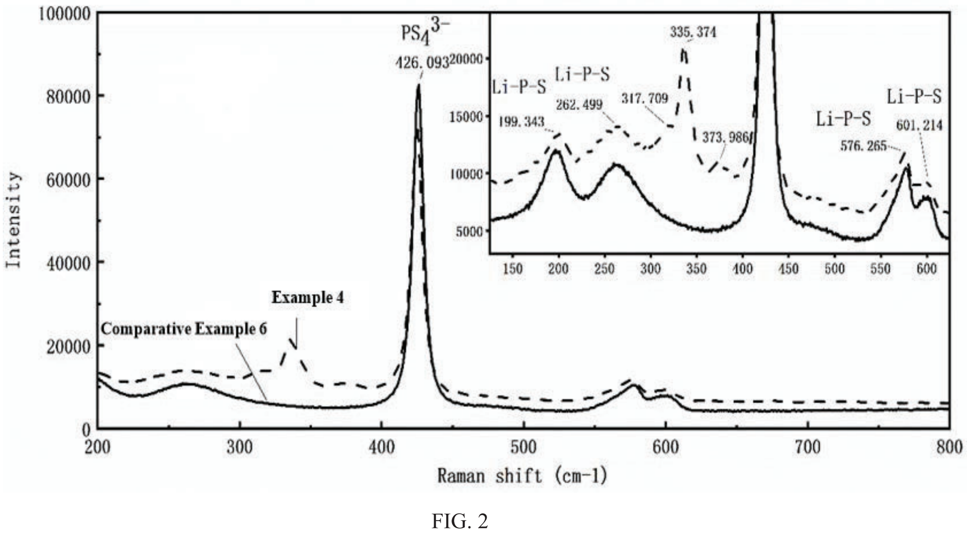

From the Raman spectrum, it can be seen that the Raman peak at 335.375 is attributed to a group containing both Sb and S elements, confirming the successful synthesis of the sulfide solid electrolyte, as shown in FIG. 2.

From the XRD pattern, the intensities $I_a$, $I_b$, $I_c$ of the diffraction peaks at $2\theta$ of $29.8\pm0.25°$, $31.45\pm0.25°$ and $33.33\pm0.25°$ were obtained, with specific data listed in Table 1. FIG. 3 is a XRD pattern of the sulfide solid electrolytes according to Comparative Example 3 and Example 4.

Table 1

|  | $I_a$ | $I_b$ | $I_c$ | $I_c/I_a$ % | $I_c/I_b$ % | Existence percentage of Sb-S bonding % |
|---|---|---|---|---|---|---|
| Example 1 | 5001 | 3703 | 930 | 18.60 | 25.11 | 98.5 |
| Example 2 | 4924 | 3638 | 949 | 19.27 | 26.09 | 99.4 |
| Example 3 | 3993 | 3001 | 805 | 20.16 | 26.82 | 99 |
| Example 4 | 3893 | 2755 | 977 | 25.10 | 35.46 | 99.8 |
| Example 5 | 4228 | 3061 | 851 | 20.13 | 27.80 | 99.3 |
| Example 6 | 5583 | 4042 | 1011 | 18.11 | 25.01 | 98.0 |
| Example 7 | 4586 | 3228 | 886 | 19.32 | 27.45 | 98.6 |
| Example 8 | 4593 | 3202 | 897 | 19.53 | 28.01 | 98.6 |
| Example 9 | 4603 | 2986 | 875 | 19.01 | 29.30 | 99.0 |
| Comparative Example 1 | 5230 | 3750 | 200 | 3.82 | 5.33 | 2 |
| Comparative Example 2 | 5082 | 3807 | 605 | 11.90 | 15.89 | 97.8 |
| Comparative Example 3 | 4506 | 3109 | 823 | 18.26 | 26.47 | 91 |
| Comparative Example 4 | 5258 | 3801 | 890 | 16.93 | 23.41 | 98.3 |
| Comparative Example 5 | 6210 | 4210 | 432 | 6.96 | 10.26 | 94 |
| Comparative Example 6 | 5367 | 3945 | 627 | 11.68 | 15.89 | 98.1 |

As shown in Table 1, the percentage of Sb-S bonding in the total bonding formed by Sb in Examples 1-9 all exceeded 98%, with $I_c/I_a$ being 18-26%, and $I_c/I_b$ being 25-36%.

2. The sulfide solid electrolytes prepared in the foregoing examples and comparative examples were subjected to ionic conductivity and air stability tests.

(1) Ionic Conductivity

0.23 g of the sulfide solid electrolyte material was weighed and poured into the battery chamber. After maintaining pressure at 3T for 10 minutes, a thickness of an electrolyte layer was measured. Blocking electrodes were placed on both sides of the electrolyte layer to complete an assembly of an impedance testing mold. The assembled impedance mold was allowed to stand at 25°C for 2 h, and an impedance test was performed, to obtain an ionic conductivity of the sulfide solid electrolyte before storing. Specific data are shown in Table 2.

The fixed dew point of a simple glove box with a volume of 110L was lowered and maintained for 4 h to remove moisture originally present in the equipment. The above impedance mold after 2 h of standing was placed into the glove box. A gas replacement was performed using a fixed-speed fan inside the glove box, with the gas replacement time fixed to 0.5 h, achieving a glove box dew point of -50°C. The side door of the glove box was closed to perform a storage experiment at an ambient temperature of 25°C. After storing for 1 h, an impedance test was performed, to obtain an ionic conductivity of the sulfide solid electrolyte after storing. Specific data are shown in Table 2.

(2) Air Stability

2-1: Air stability was characterized by an ionic conductivity retention rate before and after storing, and the ionic conductivity retention rate is calculated using Formula 2:

$$\text{Ionic Conductivity Retention Rate} = \sigma 1 / \sigma 2 \qquad \text{Formula 2}$$

in Formula 2:

$\sigma 1$ is the ionic conductivity of the sulfide solid electrolyte before storing; and
$\sigma 2$ is the ionic conductivity of the sulfide solid electrolyte after storing.

Test results are shown in Table 2.

2-2: $H_2S$ gas test was performed on the sulfide solid electrolytes prepared in Example 4 and Comparative Example 1 according to the following method:

The fixed dew point of a simple glove box with a volume of 110L was lowered and maintained for 4 h to remove moisture originally present in the equipment. The sulfide solid electrolyte and $H_2S$ gas tester were placed into the glove box. A gas replacement was performed using a fixed-speed fan inside the glove box, with the gas replacement time fixed to 0.5 h, achieving a glove box dew point of -50°C. The side door of the glove box was closed, and 2 g of sample powder was spread evenly in a container with a diameter of 4.5 cm. The tester was turned on for a storage experiment, with a storing duration of 1 h, to obtain $H_2S$ gas concentration. Test results are shown in FIG. 6.

As seen in FIG. 6, the sulfide solid electrolyte of Comparative Example 1 generated $H_2S$ gas at around 1100 s, while the sulfide solid electrolyte of Example 4 generated $H_2S$ gas at around 1800 s. This indicates that the sulfide solid electrolyte of the present application has better air stability.

Table 2

|  | Ionic conductivity before storing mS/cm | Ionic conductivity after storing mS/cm | Ionic conductivity retention rate % |
|---|---|---|---|
| Example 1 | 8.42 | 6.12 | 72.68 |
| Example 2 | 7.81 | 5.71 | 73.11 |
| Example 3 | 8.14 | 6.17 | 75.80 |
| Example 4 | 8.2 | 6.58 | 80.24 |
| Example 5 | 8.50 | 6.89 | 81.11 |
| Example 6 | 7.20 | 5.28 | 73.31 |
| Example 7 | 7.60 | 5.85 | 77.00 |
| Example 8 | 7.90 | 5.85 | 74.14 |
| Example 9 | 8.01 | 6.03 | 75.30 |
| Comparative Example 1 | 5.31 | 2.01 | 37.85 |
| Comparative Example 2 | 4.98 | 3.24 | 65.05 |
| Comparative Example 3 | 6.53 | 4.20 | 64.31 |
| Comparative Example 4 | 7.95 | 5.65 | 71.06 |
| Comparative Example 5 | 7.01 | 4.87 | 69.47 |
| Comparative Example 6 | 7.54 | 5.40 | 71.60 |

From Examples 1-9 and Comparative Examples 1-6 in Table 2, it can be seen that the sulfide solid electrolytes of the present application achieve an ionic conductivity retention rate of up to 81.11%, and have excellent ionic conductivity. In contrast, Comparative Examples 1-6 have a maximum ionic conductivity retention rate of only 71.60%, and relatively low ionic conductivity.

Finally, it should be noted that the foregoing examples are merely intended to describe the technical solutions of the present application rather than limit the present application. Although the present application has been described in detail with reference to the foregoing examples, persons of ordinary skill in the art should understand that they may still make modifications to the technical solutions described in the foregoing examples or make equivalent substitutions to some or all technical features therein. However, these modifications or substitutions do not cause the essence of the corresponding technical solutions to depart from the scope of the technical solutions of the examples of the present application.

**Claims**

1. A sulfide solid electrolyte, having a chemical composition of Formula 1, wherein a percentage of Sb-S bonding in a total bonding formed by Sb is not less than 98%,

$$\text{Li}_a\text{Sb}_b\text{P}_c\text{S}_d\text{O}_e\text{Cl}_f \qquad \text{Formula 1}$$

   in Formula 1, $4.5 \leq a \leq 6.5$, $0.02 \leq b \leq 0.9$, $0.01 \leq e \leq 0.06$, $0.9 \leq f \leq 1.6$, $b+c=1$, $d+e=5$;
   in an X-ray diffraction pattern of the sulfide solid electrolyte, intensities of diffraction peaks at $2\theta$ of $29.8 \pm 0.25°$, $33.33 \pm 0.25°$ and $31.45 \pm 0.25°$ are $I_a$, $I_b$ and $I_c$, respectively, wherein $I_c/I_a$ is 18-26%, and $I_c/I_b$ is 25-36%.

2. The sulfide solid electrolyte according to claim 1, wherein a room-temperature ionic conductivity of the sulfide solid electrolyte is not less than 7.5 mS/cm.

3. The sulfide solid electrolyte according to claim 1, wherein an ionic conductivity retention rate of the sulfide solid electrolyte is not less than 70%.

4. The sulfide solid electrolyte according to any one of claims 1-3, wherein the sulfide solid electrolyte is prepared by a method comprising the following processes:
   mixing $\text{Sb}_2\text{S}_5$, a P source and an O source and performing a primary milling, adding a Li source and a Cl source and performing a secondary milling, to obtain an intermediate phase, sintering the intermediate phase, to obtain the sulfide solid electrolyte.

5. A preparation method of the sulfide solid electrolyte according to any one of claims 1-4, comprising the following steps:

   (1) mixing $\text{Sb}_2\text{S}_5$, a P source and an O source and performing a primary milling, then adding a Li source and a Cl source and performing a secondary milling, to obtain an intermediate phase; and
   (2) performing a sintering treatment on the intermediate phase, to obtain the sulfide solid electrolyte.

6. The preparation method of the sulfide solid electrolyte according to claim 5, wherein in step (1), the P source comprises at least one of $\text{P}_2\text{O}_5$ and $\text{P}_2\text{S}_5$; the O source comprises at least one of $\text{P}_2\text{O}_5$ and $\text{Li}_2\text{O}$; the Li source comprises at least one of $\text{Li}_2\text{O}$, $\text{Li}_2\text{S}$ and LiCl; the Cl source comprises LiCl.

7. The preparation method of the sulfide solid electrolyte according to claim 5, wherein in step (1), a rotation speed of the primary milling is 350-550 r/min, and a time for the primary milling is 0.5-2 h.

8. The preparation method of the sulfide solid electrolyte according to claim 5, wherein in step (1), a rotation speed of the secondary milling is 350-550 r/min, and a time for the secondary milling is 3-5 h.

9. The preparation method of the sulfide solid electrolyte according to claim 5, wherein a temperature of the sintering treatment is 530-580°C, and a time for the sintering treatment is 4-6 h.

10. An all-solid-state lithium-ion battery, comprising the sulfide solid electrolyte according to any one of claims 1-4.

FIG. 1

EP 4 718 559 A1

FIG. 2

FIG. 3

FIG. 4

FIG. 5

FIG. 6

## INTERNATIONAL SEARCH REPORT

| | International application No. |
|---|---|
| | **PCT/CN2024/102140** |

| **A.** | **CLASSIFICATION OF SUBJECT MATTER** |
|---|---|

H01M10/0562(2010.01)i;　H01M10/0525(2010.01)i;　H01M10/42(2006.01)i

According to International Patent Classification (IPC) or to both national classification and IPC

| **B.** | **FIELDS SEARCHED** |
|---|---|

Minimum documentation searched (classification system followed by classification symbols)

　　IPC：H01M10/-

Documentation searched other than minimum documentation to the extent that such documents are included in the fields searched

Electronic data base consulted during the international search (name of data base and, where practicable, search terms used)

　　CNTXT, WPABSC, ENTXT, VEN, CNKI: 硫 s 固 s 电解质, 硫, 锑, 磷, 氧, 氯, 卤, 锂, X 3w 衍射, solid electrolyte, sulfur, antimony, phosphorus, halogen, lithium, Sb, Cl, Li, Li s Sb s "P" s "S" s O, XRD

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| PX | CN 116581371 A (NINGBO RONBAY NEW ENERGY TECHNOLOGY CO., LTD.) 11 August 2023 (2023-08-11)<br>　　claims 1-10 | 1-10 |
| A | CN 115207457 A (SVOLT ENERGY TECHNOLOGY (WUXI) CO., LTD.) 18 October 2022 (2022-10-18)<br>　　description, comparative example 3 | 1-10 |
| A | CN 115149095 A (NINGBO INSTITUTE OF MATERIAL TECHNOLOGY AND ENGINEERING, CHINESE ACADEMY OF SCIENCES) 04 October 2022 (2022-10-04)<br>　　description, embodiment 3 | 1-10 |
| A | CN 115911526 A (NINGBO RONBAY NEW ENERGY TECHNOLOGY CO., LTD.) 04 April 2023 (2023-04-04)<br>　　description, embodiment 9 | 1-10 |
| A | CN 114933331 A (SHANGHAI YILI NEW ENERGY TECHNOLOGY CO., LTD.) 23 August 2022 (2022-08-23)<br>　　description, comparative example 2 | 1-10 |

☑ Further documents are listed in the continuation of Box C. 　　☑ See patent family annex.

| | |
|---|---|
| * 　Special categories of cited documents: | "T" 　later document published after the international filing date or priority date and not in conflict with the application but cited to understand the principle or theory underlying the invention |
| "A" 　document defining the general state of the art which is not considered to be of particular relevance | |
| "D" 　document cited by the applicant in the international application | "X" 　document of particular relevance; the claimed invention cannot be considered novel or cannot be considered to involve an inventive step when the document is taken alone |
| "E" 　earlier application or patent but published on or after the international filing date | |
| "L" 　document which may throw doubts on priority claim(s) or which is cited to establish the publication date of another citation or other special reason (as specified) | "Y" 　document of particular relevance; the claimed invention cannot be considered to involve an inventive step when the document is combined with one or more other such documents, such combination being obvious to a person skilled in the art |
| "O" 　document referring to an oral disclosure, use, exhibition or other means | "&" 　document member of the same patent family |
| "P" 　document published prior to the international filing date but later than the priority date claimed | |

| Date of the actual completion of the international search | Date of mailing of the international search report |
|---|---|
| **04 September 2024** | **11 September 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/102140**

| C. | DOCUMENTS CONSIDERED TO BE RELEVANT | |
|---|---|---|
| Category* | Citation of document, with indication, where appropriate, of the relevant passages | Relevant to claim No. |
| A | WO 2022225287 A1 (UNIVERSITY OF ULSAN FOUNDATION FOR INDUSTRY COOPERATION) 27 October 2022 (2022-10-27) description, embodiment 8 | 1-10 |

Form PCT/ISA/210 (second sheet) (July 2022)

**INTERNATIONAL SEARCH REPORT**
Information on patent family members

International application No.

**PCT/CN2024/102140**

| Patent document cited in search report | | | Publication date (day/month/year) | Patent family member(s) | | | Publication date (day/month/year) |
|---|---|---|---|---|---|---|---|
| CN | 116581371 | A | 11 August 2023 | None | | | |
| CN | 115207457 | A | 18 October 2022 | None | | | |
| CN | 115149095 | A | 04 October 2022 | WO | 2024051220 | A1 | 14 March 2024 |
| | | | | KR | 20240045209 | A | 05 April 2024 |
| CN | 115911526 | A | 04 April 2023 | None | | | |
| CN | 114933331 | A | 23 August 2022 | WO | 2023217260 | A1 | 16 November 2023 |
| WO | 2022225287 | A1 | 27 October 2022 | KR | 20220145433 | A | 31 October 2022 |
| | | | | KR | 102512357 | B1 | 22 March 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310798194